# EUROPEAN PATENT SPECIFICATION

(11) **EP 1 741 270 B1**
(45) Date of publication and mention of the grant of the patent: **25.02.2009**
(21) Application number: 04730520.6
(22) Date of filing: 30.04.2004
(51) Int. Cl.: H04L 29/08, H04L 12/24, H04L 12/56

(54) **ZONE-BASED PEER-TO-PEER**
PEER-TO-PEER AUF ZONENBASIS
RESEAU D'HOMOLOGUES DIVISE EN ZONES

(43) Date of publication of application: 10.01.2007
(73) Proprietor: NTT DoCoMo, Inc., Chiyoda-ku Tokyo 100-6150 (JP)
(72) Inventor: KELLERER, Wolfgang, 82256 Fürstenfeldbruck (DE); SCHOLLMEIER, Rüdiger, 82131 Gauting (DE)
(74) Representative: HOFFMANN EITLE
(86) International application number: PCT/EP2004/004611
(87) International publication number: WO 2005/107218

(56) References cited:
- PRASANNA GANESAN ET AL: "YAPPERS: a peer-to-peer lookup service over arbitrary topology" IEEE INFOCOM 2003. TWENTY-SECOND ANNUAL JOINT CONFERENCE OF THE IEEE COMPUTER AND COMMUNICATIONS SOCIETIES (IEEE CAT. NO.03CH37428) IEEE PISCATAWAY, NJ, USA, [Online] vol. 2, 1 April 2003 (2003-04-01), pages 1250-1260, XP002310321 IEEE PISCATAWAY, NJ, USA ISBN: 0-7803-7752-4 Retrieved from the Internet: URL:http://citeseer.ist.psu.edu/cache/pape rs/cs/27074/http:zSzzSzwww.ieee-infocom.or gzSz2003zSzpaperszSz31_01.PDF/ganesan03yap pers.pdf> [retrieved on 2004-12-13]
- MISCHKE J ET AL: "Peer-to-peer and distributed search in fixed and mobile environments" PROCEEDINGS OF THE 37TH HAWAII INTERNATIONAL CONFERENCE ON SYSTEMS SCIENCES, [Online] 5 January 2004 (2004-01-05), pages 284-293, XP010682870 IEEE PISCATAWAY, NJ, USA Retrieved from the Internet: URL:http://www.mmapps.org/papers/MiSt_HICC SS_cr.pdf> [retrieved on 2004-12-13]
- GOLD R ET AL: "Use of context-awareness in mobile peer-to-peer networks" FUTURE TRENDS OF DISTRIBUTED COMPUTING SYSTEMS, 2001. FTDCS 2001. PROCEEDINGS. THE EIGHTH IEEE WORKSHOP ON BOLOGNA, ITALY 31 OCT.-2 NOV. 2001, LOS ALAMITOS, CA, USA,IEEE COMPUT. SOC, US, [Online] 31 October 2001 (2001-10-31), pages 142-147, XP010566975 IEEE PISCATAWAY, NJ, USA ISBN: 0-7695-1384-0 Retrieved from the Internet: URL:http://citeseer.ist.psu.edu/cache/pape rs/cs/24512/http:zSzzSzwww.cs.ucl.ac.ukzSz staffzSzc.mascolozSzwwwzSzcm-ftdcs2001.pdf /gold01use.pdf> [retrieved on 2004-12-13]
- RHEA S C ET AL: "Probabilistic location and routing" PROCEEDINGS IEEE INFOCOM 2002. THE CONFERENCE ON COMPUTER COMMUNICATIONS. 21ST. ANNUAL JOINT CONFERENCE OF THE IEEE COMPUTER ANDCOMMUNICATIONS SOCIETIES. NEW YORK, NY, JUNE 23 - 27, 2002, PROCEEDINGS IEEE INFOCOM. THE CONFERENCE ON COMPUTER COMMUNICA, vol. VOL. 1 OF 3. CONF. 21, 23 June 2002 (2002-06-23), pages 1248-1257, XP010593691 NEW YORK ISBN: 0-7803-7476-2
- SCHOLLMEIER R ET AL: "Routing in Mobile Ad Hoc and Peer-to-Peer Networks. A Comparison" LECTURE NOTES IN COMPUTER SCIENCE, SPRINGER VERLAG, NEW YORK, NY, US, [Online] vol. 2376, 2002, pages 172-186, XP002282781 ISSN: 0302-9743 Retrieved from the Internet: URL:http://citeseer.ist.psu.edu/cache/pape rs/cs/26126/http:zSzzSzwww.elet.polimi.itz SzUserszSzDEIzSzSectionszSzCompEngzSzGianP ietro.PiccozSzntw02-p2pzSzpaperszSz1.pdf/s chollmeier02routing.pdf> [retrieved on 2004-12-13]
- HARRELL F ET AL: "Survey of Locating & Routing in Peer-to-Peer Systems" SURVEY OF LOCATING AND ROUTING IN PEEINR-TO-PEER SYSTEMS, [Online] 3 December 2001 (2001-12-03), XP002291693 Retrieved from the Internet: URL:http://www-cse.ucsd.edu/users/guilian/ presentations/p2p_survey.pdf> [retrieved on 2004-12-13]
- RATNASAMY S ET AL: "A scalable content-addressable network" COMPUTER COMMUNICATION REVIEW, ASSOCIATION FOR COMPUTING MACHINERY. NEW YORK, US, [Online] October 2001 (2001-10), pages 161-172, XP002234113 ISSN: 0146-4833 Retrieved from the Internet: URL:http://citeseer.ist.psu.edu/cache/pape rs/cs/31416/http:zSzzSzwww.icir.orgzSzsylv iazSzcans.pdf/ratnasamy01scalable.pdf> [retrieved on 2004-12-13]
- HAAS Z J, PEARLMAN M R, SAMAR P: "The Zone Routing Protocol (ZRP) for Ad Hoc Networks" IETF DRAFT THE ZONE ROUTING PROTOCOL ZRP FOR ADHOC NETWORKSVERSION 4, [Online] 1 July 2002 (2002-07-01), XP015002597 USA Retrieved from the Internet: URL:http://ietfreport.isoc.org/old-ids/dra ft-ietf-manet-zone-zrp-04.txt> [retrieved on 2004-12-13]

## Description

### FIELD OF INVENTION

The present invention relates to zone-based peer-to-peer overlay networking, and in particular to a zone-based peer-to-peer networking, wherein partitions of the peer-to-peer overlay network form special peer groups for sharing information on content for ease of content retrieval.

### BACKGROUND ART

Prasanna Ganesan et al: "Yappers: a peer-to-peer lockup service over arbitrary topology" IEEE INFOCOM 2003. Twenty-Second Annual Joint Conference of the IEEE Computer and Communications Societies (IEEE CAT. No. 03CH37428 ) IEEE Piscataway, N.J. USA, vol. 2, 1 April 2003, pages 1250-1260, describes a peer-to-peer lookup service over arbitrary topology. In more detail, there is described an hybrid approach to reduce the nodes contacted for lookup by an content search in a peer to peer search network, wherein within a subset of peer to peer network is more distributed hash table consisting of nearby nodes for implementation of an intelligent search mechanism.

Further, in Mischke J. et al: "Peer-to-peer and distributed search in fixed and mobile environments", Proceedings of the 37th Hawaii International Conference on Systems Sciences, 5. January 2004, pages 284-293, there is described an exhaustive two-dimensional design space and a comprehensive survey of search designs for peer-to-peer in fixed and mobile environments.

Still further, in Gold R. et al: "Use of context-awareness in mobile peer-to-peer networks" Proceedings of the eight IEEE Workshop on Future Trends of distributed computing systems, FTDCS 2001, held in Bologna, Italy from 31 October to 2 November 2001, published in Los Alamitos, CA, USA, By IEEE Computer Society, USA, on 31. October 2001, pages 142-147, there is described the use of context-awareness in mobile peer-to-peer networks to exploit information on the underlying network context for a better performance and a better group organization

Peer-to-peer overlay networks are generally self-organizing distributed networks offering distributed resources to its peer nodes and related end users. From a system point of view, peer-to-peer network overlay mechanisms realize overlay networks on top of, e.g., the TCP/IP protocol stack. Due to their distributed nature, for an efficient content distribution a sufficient replication rate is a prerequisite. Here, at a high replication rate which may be assumed for existing peer-to-peer overlay networks, there is provided a high content availability with nearly no single point of failure or bottleneck. If a peer node providing content leaves the peer-to-peer overlay network, content may be provided through another peer node, from where the download of requested content may then be continued.

However, peer-to-peer overlay networks being operated without central entities, e.g., Gnutella Protocol Specification, version 0.4, available at **http://www.clip2.com/GnutellaProtocol04.pdf,** 20.03.2002, or JXTA, generally suffer from a high signaling load resulting in a poor networking efficiency. The main reason heretofore is the flooding of content requests using reactive routing schemes which do not exploit any knowledge on the peer-to-peer overlay network topology. In particular, according to existing technologies, the application of flooding mechanisms is necessary as most peer-to-peer overlay networking protocols do not provide their peer nodes with any detailed information on OSI layer 7 network topology.

In view of the above, many architectures and algorithms have been proposed to overcome the inefficiency problems of peer-to-peer overlay networks. One such architecture is Gnutella 0.4 employing simple flooding schemes to locate the requested content.

Further, Gnutella 0.6, T. Klingberg, R. Manfredi, 'Gnutella 0.6 RFC', June 2002, rfc-gnutella.sourceforge.net/draft. txt, and JXTA establish hierarchies in the peer-to-peer overlay networks. Here, Gnutella 0.6 establishes a two-tier concept with so-called ultrapeers on a higher hierarchy level and so-called leafnodes on a lower hierarchy level. Nevertheless, on the higher hierarchy level, the flooding schemes are still employed to search for requested content and to provide connectivity. This again leads to high traffic volumes, R. Schollmeier, G. Kunzmann, 'GnuViz - Mapping the Gnutella Network to its Geographical Locations', Special Issue on P2P Networking of the PIK Journal to appear in Spring 2003, and R. Schollmeier, A. Dumanois, Peer-to-Peer Traffic Characteristics, EUNICE 2003, Budapest, Hungary, September 2003.

Further, in all the peer-to-peer overlay networks routing schemes, a route to the content providing peer nodes is searched for through initiation of a content request through a user, which is referred to as reactive routing. Therefore, the peer nodes participating in such a peer-to-peer overlay networking process have only very limited knowledge on the peer-to-peer overlay network topology. The only knowledge available is which peer-to-peer overlay network peer nodes are available in the proximity of the specific peer node to send a content request according to the flooding scheme. However, the peer nodes in the peer-to-peer overlay network do not have any knowledge or information about content or information with respect to the overlay path to a node hosting the requested content.

A step towards improvement of this situation are peer-to-peer overlay networks using distributed hash tables, where some routing pre-requisites are set before a content request may be issued by a user. In more detail, in such peer-to-peer overlay networks peer nodes and content hosted by peer nodes are labeled by hash keys to make sure that content may be retrieved using the hash key as an indication for a route to the requested content. Further, the content itself is transferred to a peer node with the most appropriate hash key. As content is moved in these peer-to-peer networks to facilitate routing, these peer-to-peer overlay networks may be referred to as structured peer-to-peer overlay networks.

Examples of a peer-to-peer overlay network based on distributed hash tables are CAN, S. Ratnasamy, P. Francis, M. Handley, R. Karp, S. Shenker, 'A Scalable Content-Addressable Network', Proceedings of the ACM SIGCOMM Conference 2001, San Diego, CA, 2001, Chord, I. Stoica, R. Morris, D. Karger, M. Kaashoek, H. Balakrishnan, 'Chord: A Scalable Peer-to-Peer Lookup Service for Internet Applications', Proceedings of the ACM SIGCOMM Conference 2001, San Diego, CA, 2001, or Tapestry, K. Hildrum, J. Kubiatowicz, S. Rao, B. Zhao, 'Distributed Object Location in a Dynamic Network', Proceedings of the 14th ACM Symposium on Parallel Algorithms and Architectures (SPAA2002), Winnipeg, Canada, 2002. These peer-to-peer overlay networks decrease signaling overhead significantly by employment of hash keys assigned to each peer node and every content. Peer nodes in a distributed hash table based peer-to-peer overlay network connect to each other, depending on their hash key, such that the peer-to-peer overlay network is built in a way that a peer node connects always to the further peer node with a minimum difference between them in view of their hash values. Therefore, assuming that every peer node has only two neighbors, the peer-to-peer overlay network is established as a virtual, ordered chain. Therefore, routing to peer nodes is achieved simply by sending the content request in the direction of increasing hash values, if the hash value of the content request is higher than the hash value of the peer node initiated in the content request, or otherwise in a direction of decreasing peer node hash keys, if the hash value of the content request is smaller than the hash value of the content requesting peer node. This predetermination of the routing path before issuance of a particular content request may be regarded as proactive routing.

However, the significant decrease of routing overhead in distributed hash table based peer-to-peer overlay networks is achieved at the cost of certain requirement not being acceptable for every application. E.g., in distributed hash table based peer-to-peer overlay networks, any content brought into the peer-to-peer overlay networks by peer nodes must be transferred to that peer node with the minimum difference between the describing hash values. This approach may not be applicable to all applications as the content, e.g., dynamic sensor data, is bound to a certain peer node and may not be transferred to other peer nodes. Further, the transmission of content may also lead to a significant increase of the overhead, as the content must also be transferred in the peer-to-peer overlay network and therefore decreases networking efficiency.

With the exception of structured peer-to-peer overlay networks like CAN or CHORD, which have the disadvantages outlined above, proactive routing schemes are currently not employed in peer-to-peer overlay networks, but only in mobile ad-hoc networks. Examples of proactive routing in ad-hoc networks are the destination-sequenced distance vector protocol DSDV, C. Perkins, P. Bhagwat, Highly Dynamic Destination-Sequenced Distance-Vector Routing ({DSDV}) for Mobile Computers, SIGCOMM'94 Conference on Communications Architectures, Protocols and Applications, 1994, or the optimized link state routing protocol (OLSR), P. Jacquet, P. Muhlenthaler, A. Qayyum, Optimized Link State Routing Protocol, Internet Draft, draft-ietf-manet-olsr-*.txt.

Further, there is available a so-called zone routing protocol ZRP, Z. Hass, M. Pearlman, The Zone Routing Protocol ZRP for Ad Hoc Networks, Internet Draft, MANET Working Group, March 2000, employing proactive routing for mobile ad-hoc network nodes within a network partition and reactive routing outside the network partitions, wherein the radius of the network partition is defined by the distance in terms of hop numbers to neighboring mobile ad-hoc network nodes.

Further, the zone routing protocol ZRP is strictly bound and dependent on the physical layers and only provides possibilities to route mobile ad-hoc network node addresses, without any particular relation of content available at different mobile ad-hoc network nodes.

### SUMMARY OF INVENTION

In view of the above, the object of the present invention is to optimize the peer-to-peer search efficiency in peer-to-peer overlay networks.

According to the present invention, this object is achieved by a method for zone-based peer-to-peer overlay networking according to claim 1, wherein at least one set of peer nodes lying in zone partition of the peer-to-peer network is established as special peer group. Peer nodes in a special peer group share information on content available in each peer node in support of content search and delivery.

Further, the zone-based partition of the peer-to-peer overlay network and the related introduction of special peer groups allows for a two-stage approach to routing, e.g., the application of proactive routing within the special peer group and the application of reactive routing outside the special peer group. For proactive routing within the special peer group, at each peer node there is maintained local search data reflecting knowledge on peer-to-peer overlay network topology and knowledge on content being available within the special peer group. Should requested content be available within the special peer group, the related knowledge on network topology may be used for more efficient routing within the special peer group and also for direct download of requested content. Otherwise, i.e. outside the special peer group, there may be applied reactive routing, which the context of the present invention means that a route from a content requesting peer node to a content providing peer node is only developed by means of routing request messages, when a user initiates the content request.

Therefore, the present invention allows to reduce signaling load in the peer-to-peer overlay network to a minimum by introducing limited, dynamic knowledge of the peer-to-peer overlay network topology in a distributed manner at each of the peer nodes. Using this approach, the present invention provides a suitable architecture for an efficient search mechanism by maintaining the pure peer-to-peer character of the overlay network.

Further, another advantage is that the present invention improves the efficiency of a zone for peer-to-peer overlay networks by combining reactive routing with proactive routing, in particular for provision of shared information on content availability, for fast and routing efficient location of a requested content. Therefore, the peer-to-peer overlay network according to the present invention employs no centralized entities and no hierarchies are imposed on the peer nodes participating in the peer-to-peer overlay networks.

Therefore, zone-based peer-to-peer overlay networking in the sense of the present invention allows participating peer nodes to share all kinds of resources in a pure peer-to-peer overlay network, where examples of such shared resources may be computing power, cryptographic keys, content files of any type, meter information on describable resources, or any other type of zones.

Overall, the measures of zone-based peer-to-peer overlay networking as outlined above allows to reduce a signaling load for zone-based peer-to-peer networks and leads to a higher degree of acceptance of peer-to-peer applications over resource limited peer-to-peer overlay networks by users due to an increase in current delivery quality, e.g., the reduction of content search time. The reduction of a signalling load also leads to a decrease in cost for the operator of the peer-to-peer overlay network.

According to a preferred embodiment of the present invention, proactive routing relies on generation of the routing message of a peer node initiating the proactive routing process. Preferably, the routing message has a message header carrying a global identification of the peer node and a message payload section carrying content search data.

Therefore, the inventive zone-based peer-to-peer protocol and related definition of message structure are provided in particular in support of content search in an overlay type peer-to-peer network.

Preferably, the routing and forwarding of routing messages for proactive routing in a special peer group is achieved according to a knowledge of hosted content of peer nodes in the special peer group and/or according to a knowledge of path topologies in the special peer group.

An important advantage of this preferred embodiment of the present invention is an acceleration of content delivery and routing, as within the special peer group path topologies are maintained, e.g., through use of routing tables for optimized routing.

According to yet another preferred embodiment, the routing message may be processed either for content search and/or content delivery at each peer node receiving the routing message during proactive routing,

This preferred embodiment of the present invention allows to flexibly adapt information carried by routing messages, e.g., information on a route, a routing message has already taken or information on a path topology, the routing message still has to take to a target peer node. Further examples of processing of routing messages is updating of hop count, comparing of hop count with a maximum of hop counts, and deletion of a routing message when a hop count exceeds a pre-established threshold.

Further preferred embodiments of the present invention relate to the set-up of the routing message payload section carrying content search-related data.

Here, according to a preferred embodiment, the payload section may carry content advertisement information, e.g., a string characterizing a content main and, optionally, content characterizing keywords.

According to this preferred embodiment, it is possible to advertise available content over a special peer group prior to content delivery in support of proactivity. Alternatively, the payload section may be related to content search outside the special peer group and comprise a search string for content delivery and a minimum required download speed. Still other options are an identification of a content providing peer node and a content description, or an address for access to a content providing peer node. Overall, the provision of a dedicated routing:message specifically adapted to content delivery within a zone-based peer-to-peer overlay network improves and supports content delivery efficiency.

Further preferred embodiments of the present invention are related to a content query, e.g., either inside a special peer group or outside a special peer group.

According to a preferred embodiment of the present invention being related to content query within a special peer group, it is possible to access local search data at a peer node initiating such a content query. Should the content be available within the special peer group, all that is necessary is further retrieval of a path topology to the content-providing peer node in the special peer group and subsequent download of the requested content.

Therefore, in using the pre-established special peer groups and related advertised shared information on content availability, no signaling for content delivery as such is necessary for content delivery within a special peer group of the zone-based peer-to-peer network, so as to significantly speed up content delivery and at the same time reduce corresponding signaling overhead in the zone-based peer-to-peer network.

According to yet another preferred embodiment of the present invention, content query is executed across a plurality of special peer groups.

According to a preferred embodiment, it is proposed that a content query is executed at at least one border peer node of a special peer group, when requested content is not retrievable within the special peer group, which border peer node content query may be repeated recursively until a predetermined number of repetitions is reached.

Here, an important advantage is that at each node again local search data may be evaluated with respect to a special peer group of the border peer node, so that the efficient approach for a content delivery with a special peer group is repeated recursively step by step from border peer node to border peer node.

Further preferred embodiments of the present invention are related to special peer group establishment.

According to the present invention, it is proposed that a special peer group is established with respect to each single peer node in the peer-to-peer overlay network. In other words, around each peer node of the zone-based peer-to-peer overlay network, there is provided a special peer group, which therefore overlap across the zone-based peer-to-peer overlay network. The very benefit of this preferred embodiment is that no hard boundaries are defined between special peer groups in avoidance of content delivery bottlenecks.

According to preferred embodiments of the present invention, advertisement of shared information with respect to available content is not only achieved at the time of special peer group establishment, but also at the time of a special peer group extension for increase of flexibility.

Further, according to a preferred embodiment, there is executed an advertisement or eliminate advertisement during runtime for up-date of shared information on content availability, when content is extended at certain peer nodes in the zone-based peer-to-peer overlay network or eliminated or when further peer nodes join the zone-based peer-to-peer network.

According to yet another preferred embodiment of the present invention, it is also proposed to use exchange of advertisement information to indicate key varies of peer nodes in the zone-based peer-to-peer overlay network. Therefore, this preferred embodiment of the present invention accurately maintains a real-time status of the zone-based peer-to-peer network and content being available therein.

According to another preferred embodiment of the present invention, it is proposed to establish a special peer group according to a predetermined peer group radius, i.e. hop counts from a center peer node in a special peer group. Preferably, the radius is a function of data availability, which may be expressed as replication rate in the peer-to-peer network.

Therefore, the present invention allows for a flexible trade between replication rate of content provided in the peer-to-peer network and size of special peer groups. In other words, an increase of the peer group radius and therefore an acceptance of a slightly increased signaling allows for a reduction of content replication rate and vice versa.

According to further preferred embodiments of the present invention, it is proposed to operate the zone-based peer-to-peer network either by binding a peer-to-peer network topology to a physical network topology or by mapping a peer-to-peer network topology to a physical network layer according to semantic relations of available contents at different peer nodes.

Therefore, according to the present invention, it is proposed to optimize the link between the higher layer peer-to-peer network and the lower layer physical network. It is this consistent approach to data exchange across hierarchies in the protocol stack that achieves maximized content delivery at minimum signaling effort.

According to another preferred embodiment of the present invention there is provided a computer program product directly loadable into the internal memory of a peer node of a zone-based peer-to-peer network comprising software code portions for performing the inventive zone-based peer-to-peer networking process when the product is run on a processor of the peer node.

Therefore, the present invention is also provided to achieve an implementation of the inventive method steps on computer or processor systems. In conclusion, such implementation leads to the provision of computer program products for use with a computer system or more specifically a processor comprised in e.g., a peer node of a zone-based peer-to-peer network.

This programs defining the functions of the present invention can be delivered to a computer/processor in many forms, including, but not limited to information permanently stored on non-writable storage media, e.g., read only memory devices such as ROM or CD ROM discs readable by processors or computer I/O attachments; information stored on writable storage media, i.e. floppy discs and harddrives; or information convey to a computer/processor through communication media such as network and/or Internet and/or telephone networks via modems or other interface devices. It should be understood that such media, when carrying processor readable instructions implementing the inventive concept represent alternate embodiments of the present invention.

### DESCRIPTION OF DRAWING

In the following, preferred embodiments of the present invention will be described with reference to the drawings, in which:
- Fig. 1: shows a general outline of zone-based peer-to-peer networking according to the present invention;
- Fig. 2: shows a protocol stack underlying zone-based peer-to-peer networking according to the present invention;
- Fig. 3: shows a schematic diagram of a peer node operated in a zone-based peer-to-peer network according to the present invention;
- Fig. 4: shows a flowchart of operation of the peer node shown in Fig. 3 with respect to content retrieval;
- Fig. 5: shows details of the zone set-up protocol, the zone query protocol, and the bordercast resolution protocol shown in Fig. 2 and underlying the operation of the peer node shown in Fig. 3;
- Fig. 6: shows a flowchart of operation of the peer node shown in Fig. 3 with respect to a bordercast query;
- Fig. 7: shows a flowchart of operation of the peer node shown in Fig. 3 with respect to special peer group establishment;
- Fig. 8: shows an example of zone-based peer-to-peer networking according to the present invention;
- Fig. 9: shows availability of a specific content in average against zone radius;
- Fig. 10: shows initiated content delivery traffic according to the present invention in comparison to prior art approaches; and
- Fig. 11: shows received content delivery traffic according to the present invention in comparison to prior art approaches.

### DESCRIPTION OF BEST MODE AND PREFERRED EMBODIMENTS

In the following, the best mode of the present invention as well as preferred embodiments of the present invention will be described with reference to the drawings. Insofar as specific functionality residing in the present invention is described, it should be noted that such functionality may either be implemented in software, in hardware, or a combination thereof. Further, while certain functionalities are explained in relation to certain functional units, it should be noted that such assignment of functional units to sub-units of peer nodes operated in a zone-based peer-to-peer network may be apparently modified and varied by a person skilled in the art as long as the specification of the zone-based peer-to-peer network protocol is met.

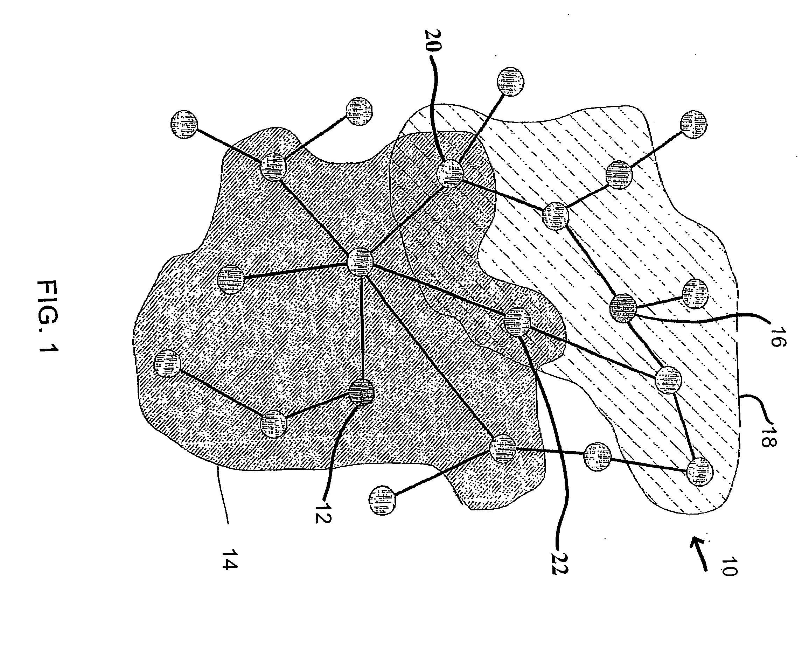

Fig. 1 shows a general outline of zone-based peer-to-peer networking 10 according to the present invention.

As shown in Fig. 1, the starting point of the present invention is the operation of a peer-to-peer network, where a plurality of peer nodes are connected with each other for content delivery. Here, it should be noted that peer-to-peer networks are operated on top of a transport layer according to the OSI protocol stack model and that the present invention is well applicable to any type of transport protocol and underlying physical layer, irrespective of wireline communication, wireless communication, circuit-switched communication, packet-switched communication, or any other networking technology suitable in support of peer-to-peer networks.

As shown in Fig. 1, an important aspect of the present invention is the operation of peer-to-peer networks using zones which are defined with respect to peer nodes. E.g., as shown in Fig. 1, a peer node 12 may have a zone equivalently referred to as special peer group in the following, consisting of all peer nodes that are reachable within a hop count radius of, e.g., two. Similarly, for peer node 14, again a related special peer group may be defined as comprising all peer nodes in the zone-based peer-to-peer network 10, which are reachable within a hop count radius of two.

The representation of the zone-based peer-to-peer network shown in Fig. 1 already indicates that, according, to the present invention, each peer node in the zone-based peer-to-peer network has established its own special peer group which implies that such special peer groups may overlap, e.g., according to special peer nodes 20 and 22 lying, both, in the first special peer group 14 and the second special peer group 18, respectively.

Yet another important aspect of zone-based peer-to-peer networking according to the present invention is related to the type of routing that is applied, both, for sharing information on available content in the zone-based peer-to-peer network 10 and for exchange of related information. Here, a first option applied according to the present invention is reactive routing, which in the context of the present invention means that a route from a routing source peer node to a routing target peer node providing a requested resource is only developed by means of routing request messages at the time a user dispatches the routing request. To the contrary, proactive routing in the sense of the present invention means forwarding routing messages within a special peer group according to a knowledge of hosted content in the special peer group and/or according to a knowledge of path topologies in the special peer group.

In view of the above, according to the present invention it is now suggested to apply proactive routing for content search with respect to peer nodes lying in a special peer group using knowledge on peer-to-peer overlay network topology and knowledge on content being available in the special peer group and further reactive routing for content search with respect to peer nodes lying outside the special peer group wherein the request for content search is initiated.

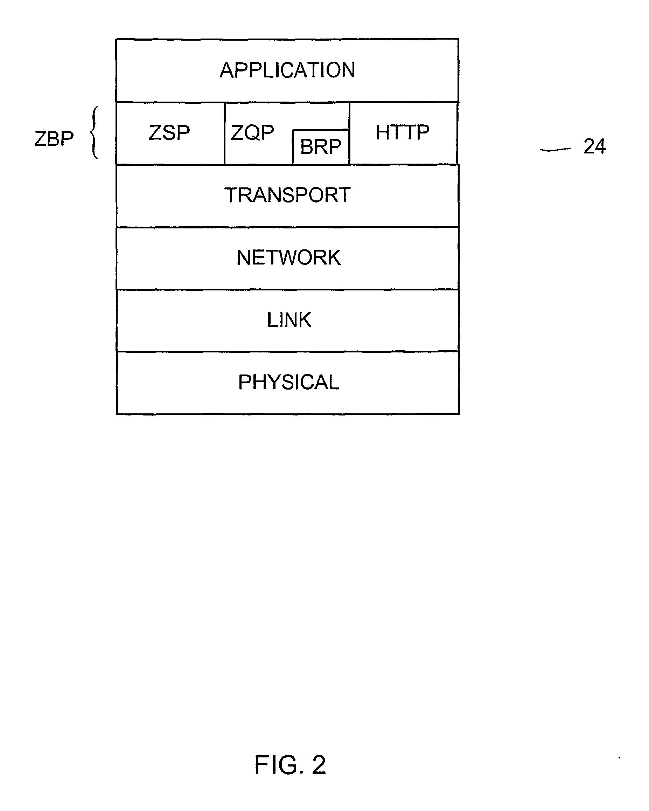

Fig. 2 shows a protocol stack 24 according to the OSI reference model underlying zone-based peer-to-peer networking according to the present invention.

As shown in Fig. 2, the lower four layers of the protocol stack are commonly referred to as any type of standard, network, link, and physical networking protocol in a non-restricting manner for the present invention. In other words, according to the present invention, any type of related networking protocol is well applicable irrespective of physical aspects and topologies of the physical network on which the peer-to-peer networking is actually operated and as outlined above.

As shown in Fig. 2, the protocol architecture according to the present invention for zone-based peer-to-peer networking relies on a zone-based peer-to-peer protocol ZP consisting of three sub-protocols, e.g., the zone set-up protocol ZSP for special peer group establishment, the zone query protocol ZQP for content advertisement and query within a special group, and a bordercast resolution protocol BRP for content query and delivery across special peer group boundaries. Additionally, HTTP may be employed for data exchange functionalities.

As shown in Fig. 2, the zone-based peer-to-peer protocol ZBP is designed to support receptions of user inputs from the application layer and to control and coordinate the zone set-up protocol ZSP, the zone query protocol ZQP, and the data exchange protocol, e.g., HTTP.

The zone set-up protocol ZSP is designed for management of a special peer group for the peer node, e.g., for sending out peer node content advertisements at handling incoming peer node content advertisements, as will be explained in more detail in the following.

The zone query protocol is designed to provide the peer node with a requested content search functionality and further with routing functionality to handle incoming content request messages from other peer nodes.

Further, bordercast content request for content delivery across special peer group boundaries are defined according to the bordercast resolution protocol BRP.

Optionally, although not shown in Fig. 2, on top of the transport layer and under the zone-based peer-to-peer networking protocol ZBP, there may be provided a connection handler offering an interface between the zone-based peer-to-peer protocol ZBP and the transport layer, e.g., the TCP/IP or the UDP/IP layer. Here, such a connection handler would offer configuration possibilities to influence the way connections are established. E.g., the peer-to-peer overlay network connections could be bound to the physical layer topology for minimization of connection length or be operated as cross layer communication channel for retrieval of information on the physical transport layer, e.g., hop distances or delay. Therefore, the connection handler is provided to establish connections according to criteria and parameters from both, either the application layer according to location and application context as well as from the transport layer or below, e.g., according to physical topology and characteristics.

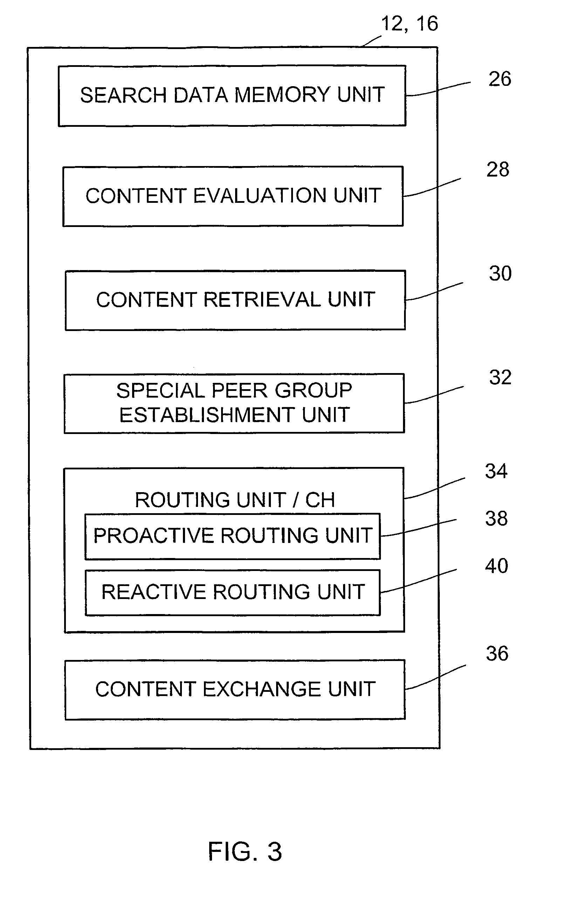

Fig. 3 shows a more detailed schematic diagram of a peer node operated in a zone-based peer-to-peer network according to the present invention.

As shown in Fig. 3, a peer node operating in a zone-based peer-to-peer network comprises a search data memory unit 26, a content evaluation unit 28, a content retrieval unit 30, a special peer group establishment unit 32, a routing unit 34, and a content exchange unit 36. Further, the routing unit 34 comprises a proactive routing unit 38 and a reactive routing unit 40.

Operatively, and in view of the protocol stack 24 shown in Fig. 2, the content exchange unit 36 is provided for implementation and operation of the HTTP protocol. Further, functionality defined according to the zone-based query protocol ZQP is implemented into the routing unit 34 and the content retrieval unit 30, as will be explained in more detail in the following. The same applies to functionality being related to bordercast content delivery, which is also implemented into the content retrieval unit 30 and into the routing unit 34. Still further, functionality being related to the zone set-up protocol ZSP is implemented into the special peer group establishment unit 32. The further search data memory unit 26 and content evaluation unit 28 are provided for maintenance and operation on shared information and content being available within a special peer group or, in other words, for evaluation of availability of a requested content within a special peer group in view of a previously established special peer group and related advertised content therein.

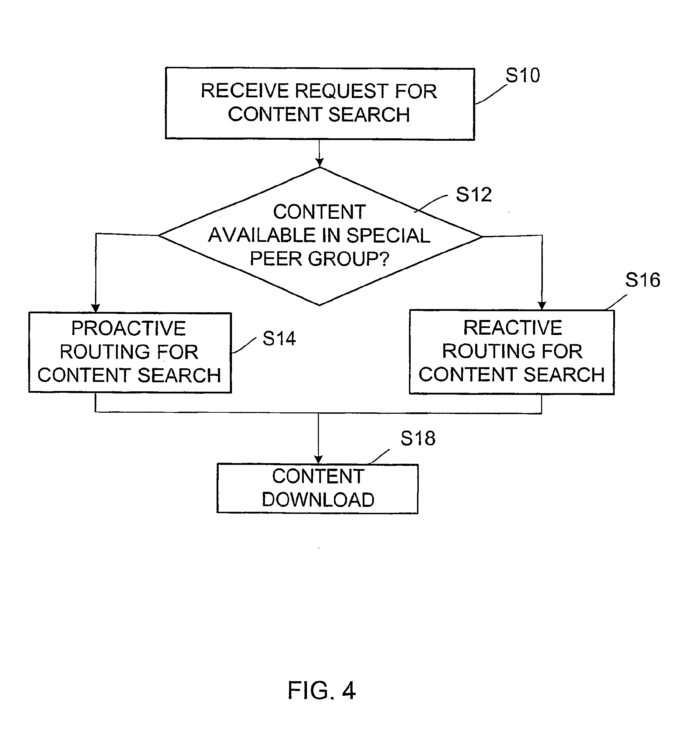

Fig. 4 shows a flowchart of operation for content delivery using the zone-based peer-to-peer overlay networking concept outlined so far.

As shown in Fig. 4, initially a request for content will be received by the interface unit that may be assigned, without restricting scope of the invention, to the content evaluation unit 28 in a step S10. Then, in a step S12, the content evaluation unit 28 will check on availability of the requested content within the special peer group of the peer node where the content request is received through access to the search data memory unit 26, storing shared information on content being available within the special peer group.

As shown in Fig. 4, should the requested content be available within the special peer group, then the content retrieval unit 30 will execute a proactive routing step S14 for content search through activation of the proactive routing unit 38. Otherwise, the content retrieval unit 30 will initiate a reactive routing step S16 for content search through activation of the reactive routing unit 40. Following either step S14 or step S16, the content retrieval unit 30 will then activate the content exchange unit 36 for content download according to a step S18. Therefore, the functionality of the content retrieval unit 30 is to execute control over content retrieval either within the special peer group of a peer node processing a content request or across the related special peer group boundary.

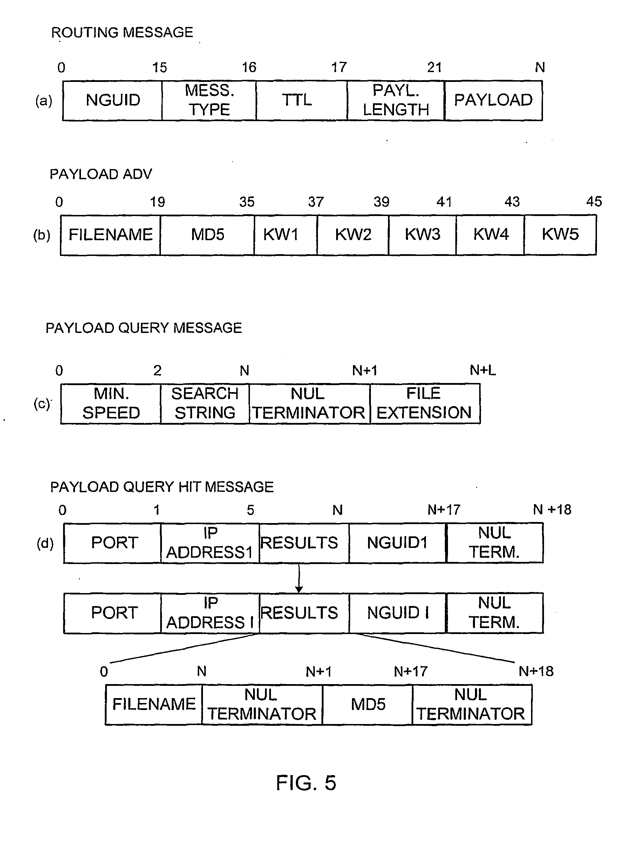

In the following, more details with respect to proactive routing in support of special peer group set-up and content search and delivery will be explained with respect to Fig. 5 showing details of routing messages defined according to these protocols.

Generally, and as will be explained in more detail in the following, protocols are operated with respect to zone set-up and content search and delivery. Initially, during a zone set-up, content available within a special group is propagated within the special peer group using advertisement routing messages. In particular, according to the present invention, it is proposed to use the following four types of advertisement messages:
- an initial advertisement routing messages IADV to advertise content provided through a center peer node of a special peer group to peer nodes in the special peer group at the time of special peer group establishment or provided through a new peer group, which is added to a special peer group at the time of special peer group extensions;
- a response advertisement routing messages RADV, which is sent from a peer node to a peer node initiating forwarding of an initial advertisement routing message;
- an apt advertisement routing message AADV, which is sent from a peer node in a special peer group, where available content is extended to further peer nodes in the special group for up-date of shared information on content in the special peer group; and
- an eliminate advertisement routing message EADV, which is sent from a peer node in a special peer group, where available content is reduced to further peer nodes in the special peer group to up-date shared information on content in the special peer group.

In view of the above, the different types of advertisement routing messages are defined under the zone query protocol ZQP. Further, content query-related routing messages are defined in the bordercast routing protocol according to:
- a border query message B_query, which is forwarded for content query to a border peer node of a special peer group, when requested content is not retrievable through evaluation of such data at the content requesting peer node within the special peer group; and
- a border query hit response routing message B_query_hit, which is returned by a border node to a content requesting peer node, when the requested content is retrievable at the border peer node receiving a border query routing message.

Irrespective of the different types of routing messages outlined above, according to the present invention it is proposed that a routing message defined for proactive routing according to the zone set-up protocol ZSP of the bordercast resolution protocol always has a message header carrying at least a global identification of the peer node initiating the routing message and a message payload section carrying content search and delivery-related data.

Fig. 5(a) shows that the routing message header, besides the global identification of the peer node NGUID, may also comprise a message type indication, a time to live TTL indication, and a payload length indication. Optionally, although not shown in Fig. 5(a), the message header may further comprise a peer group radius field and a hop counter field for processing of the routing message during forwarding thereof. Further, the amount of bytes of each sub-section of the routing message are indicated through integers on top of the schematic representation of the routing message shown in Fig. 5(a).

Further to the above, it should be noted that one example of constructing a global identification of a peer node may be applying a MD5 hash of a string concatenated from an IP address of a peer node and date and time of installation of peer node software, which type of construction of calls is non-binding for the scope of the present invention.

Further to the above, a routing message payload section, besides the mandatory content to be explained in the' following, may also carry a route that a routing message has to take and/or a path along which a routing message has already been routed for processing of the routing message as intermediate peer nodes between a source peer node and a target peer node during content delivery.

Fig. 5(b) shows a general structure of the advertisement message payload section as comprising a file name and a local unique content description, a MD5 hash as global unique content identification, and a set of key words KW1 to KW5 for characterization of content characteristics. Here, it should be noted that the payload structure is identical for all different types of advertisement messages listed above, i.e. advertisement routing messages IADV, RADV, AADV, and EADV, respectively.

Fig. 5(c) shows a routing message payload section for a bordercast query message as comprising a minimum speed for content download, a search strain characterizing the requested content, a NUL terminator, and a file extension, which file extension is optional, for additional characterization of the requested content, e.g., as being related to an executable file according to file extension .EXE or, e.g., as source code file according to a file extension .c.

Fig. 5(d) shows a routing message payload section for a border query hit response D_query_R, assuming that routing of the physical layer is achieved using TCP/IP as one non-binding example. In view of this, the border query hit response would comprise a port for indication of an application, an IP effect for access to the content-providing peer node, a result section, a global identification of the content providing peer node NGUID 1, and a NUL termination, respectively. As shown in Fig. 5(d), it is possible to indicate a border query hit result for a plurality of content-providing peer nodes 1, ..., 1.

As also shown in Fig. 5(d), the result section of a border query hit response comprises, e.g., a file name indication, or more generally, a strain name indication of the available content, a NUL terminator, a MD5 hash of the strain name and a further NUL terminator, respectively.

In view of the above, it becomes clear that the present invention supports a parallel local unique identification of content and global unique identification of a content wherein, e.g., a specific content may be characterized using local unique identification within a special peer group and further advertised across the whole peer-to-peer overlay network using a global unique identification. The advantage of this is that local unique identifications may be replicated within different peer-to-peer groups, if this is considered advantageous.

Further, although not shown in Fig. 5, routing message payload sections with respect to bordercast resolution protocol definitions may also comprise a special peer group counter, a maximum number of special peer groups to be searched, and a route from the content requesting peer nodes to the border node for subsequent routing of the border query message for handling of border query messages across a plurality of special peer groups, as will be explained in more detail in the following. Further to the above, it should be noted that one option of data exchange subsequent to content hit response would be the application of HTTP, as already outlined above. According to the present invention, it is also proposed to use q content range header according to HTTP during connection break on the physical.

In view of the explanations given above, in the following further aspects of the present invention being related to clarity of border resolution query and peer group establishment will be explained.

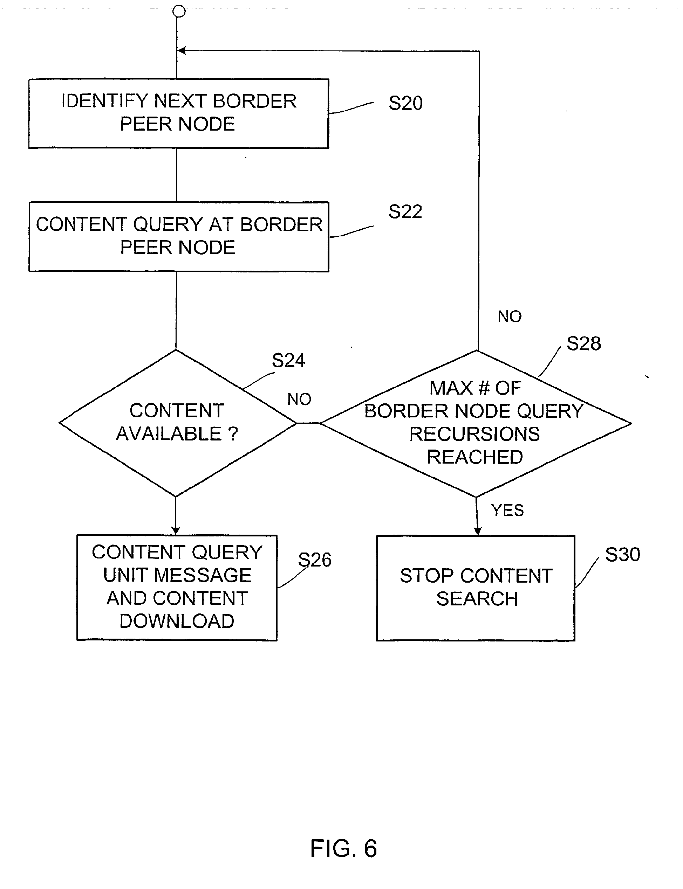

Fig. 6 shows a flowchart of operation with respect to bordercast resolution query executed by the content retrieval unit 30 shown in Fig. 3.

As shown in Fig. 6, bordercast resolution with respect to a content request starts with the identification of a next border peer node in a step S20. Here, one may assume that one is operating in a special peer group, and in particular at a center peer node thereof and that the result of evaluation of a content indicates that the requested content is not available within the special peer group. Then, this step S20 serves to identify one or more border peer nodes of the center peer node which will then receive a border query for evaluation in a peer node in a special peer group. In other words, once a requested content is not available at a center peer node, the bordercast resolution will proceed directly to border peer nodes instead of also evaluating available content at inner peer nodes, i.e. peer nodes neither being the center peer nodes nor the border peer nodes.

A further aspect being related to the identification of the next border peer node according to step S20 is that, assuming that the requested content is also not available at a border peer node after submission of a query message, then from this border peer node again a border query node may be forwarded from these border peer nodes to further border peer nodes, which again are border peer nodes of the previous border peer node. In other words, according to the present invention, it is proposed to achieve bordercast resolution recursively.

As shown in Fig. 6, at each border peer node there is evaluated the content being available at the border peer node in a step S22. After evaluation of availability of the requested content in a step S24, a border hit response will then be routed to the peer node that initially requested the content for subsequent content download in a step S26.

As shown in Fig. 6, should a content node be available, there follows a step S28 to investigate whether a maximum number of border resolution queries has been reached. If this is not the case, the procedure branches back and again executes step S20. Otherwise, the search for requested content will be stopped in a step S30.

Here, it should be noted that the evaluation of whether a maximum number of bordercast resolution has been reached is preferably achieved through processing of the routing message, in particular related hop counters or special peer group counters mentioned above, during proactive routing of bordercast query routing messages. Assuming that related data structures are provided for the routing messages, this a very efficient approach to achieving a limitation of content search within a zone-based peer-to-peer network. Further, assuming that a requested content is searched and found in the peer-to-peer overlay network and that a plurality of content-providing peer nodes could be identified, according to the present invention it is also supported that the content requesting peer node continues a content download after change of content-providing peer node, should a previously activated content-providing peer node go off-line or near the zone-based peer-to-peer network.

Further, assuming that path topologies are maintained in the routing message payload sections, this is also preferably in support of a download after the successful content search. Preferably, should requested content be available inside a special peer group without bordercast resolution, such a download may start immediately from the content requesting peer node within a special peer node group.

In other words, while according to the content delivery within a special peer group only the center peer node thereof is evaluating search data for retrieval of requested content and optionally a path topology to a content-providing peer node within the special peer group for subsequent download for requested content, in the case of bordercast resolutions such an approach is applied recursively or via at least one border peer node to achieve content search and delivery.

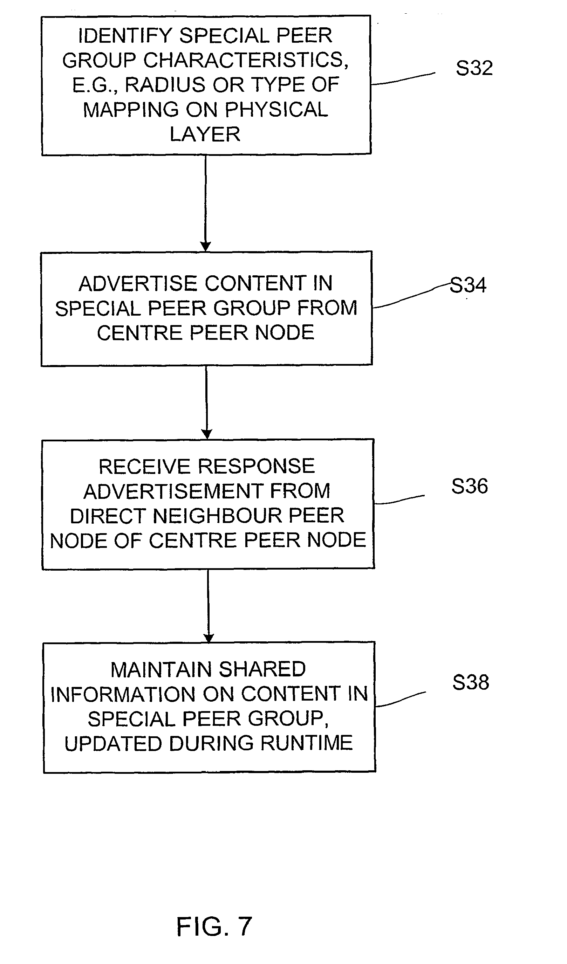

A further aspect of the present invention is peer-to-peer group establishment and will be explained with respect to Fig. 7.

As shown in Fig. 7, establishing of special peer groups starts with identification of parameters classifying a special peer group in a step S32. Here, one such typical parameter would be peer group radius, which preferably may be established as number of hop counts from a center peer node to neighbouring peer nodes in the special peer groups. One option to determine the peer group radius is to derive it as a function of data availability expressed as average replication rate in the peer-to-peer network. Here, one may assume that the higher the replication rate of identical data in the peer-to-peer network is, the lower the peer group radius may be without affecting content delivery efficiency. Experiments have shown that a peer group radius of up to four hop counts has proven successful, which number of hop counts, however, is non-binding for the scope of the present invention.

Another characteristic of peer group establishment is the way the peer-to-peer overlay network is mapped onto the physical layer. A first option is to bind a peer-to-peer network topology to a physical network topology for subsequent efficient routing of routing messages, e.g., through the connection handler referred to above. Optionally, before binding, physical network topology may be retrieved, which also applies to hop distances and related delays. Another option for mapping a peer-to-peer network topology to a physical network layer would be to use semantic relations of available contents at different peer nodes for assignment of peer-to-peer network links to physical layer network links. In other words, the more contents is shared between two neighbouring peer nodes, the higher the physical layer connectivity should be.

Further, it should be noted that peer group establishing may not only be executed during the preparation phase for content delivery, but may as well be executed during runtime of the zone-based peer-to-peer overlay network, when a new peer node is added to the peer-to-peer network. In such a case, on a physical network layer, initially there is established a connection with at least one peer node of the zone-based peer-to-peer network requesting an address of the currently active peer node either from a beacon server or employment of an address stored from previous allocation of the new peer node to the peer-to-peer overlay network in a related peer node memory.

As shown in Fig. 7, subsequent to step S32, there is executed a step S34 for advertisement of content in a special peer group from a center peer node. This is achieved using the routing message protocol definitions explained above with reference to Fig. 5.

As shown in Fig. 7, in response to the advertisement initiated in the center peer node, then a response advertisement will be received from neighbouring peer nodes, so that the center node is also informed about content being available in the established special peer group. One option would be to receive such response advertisements only from direct neighbours of the center peer node to reduce signalling nodes in the zone-based peer-to-peer network. Otherwise, one may assign an upper hop count for forwarding response advertisements from peer nodes neighbouring the center peer node. If this is provided for, the time for peer group establishment may be reduced as response advertisements may be fed back directly to the center peer node and need not be flooded step by step through the zone-based peer-to-peer overlay network.

Further, it should be noted that advertisements may be related to any type of information, i.e. audio or video files, further to services or any other type of functionality that may be provided for at a peer node in the overlay peer-to-peer network. Therefore, content may not only be related to content resources, but also to peer node context information which is of particular benefit for context-sensitive applications and support thereof as peer nodes in the zone-based peer-to-peer overlay network. Further, one may preferably assume that the initial advertisement on content is complete with respect to content being available within the special group.

As shown in Fig. 7, in a step S38 peer group establishment is not only executed as initial peer group establishment, but also during runtime of the zone-based peer-to-peer overlay network for maintenance of shared information of content and related up-date in a step S38. Heretofore, there are exchanged add-advertisements when content at specific peer nodes is extended or related eliminate advertisement if such content is reduced. Preferably, such add-advertisement and/or eliminate advertisement may be incremental and only indicate a data shared information on available content to minimize routing traffic in the zone-based peer-to-peer network. Similarly, such add- and/or eliminate advertisements may be sent within the zone-based peer-to-peer network to indicate 'keep alive' of certain peer nodes and to conclude on no 'keep alive' indication, should such add- and/or eliminate advertisements not be received within certain predetermined periods of time.

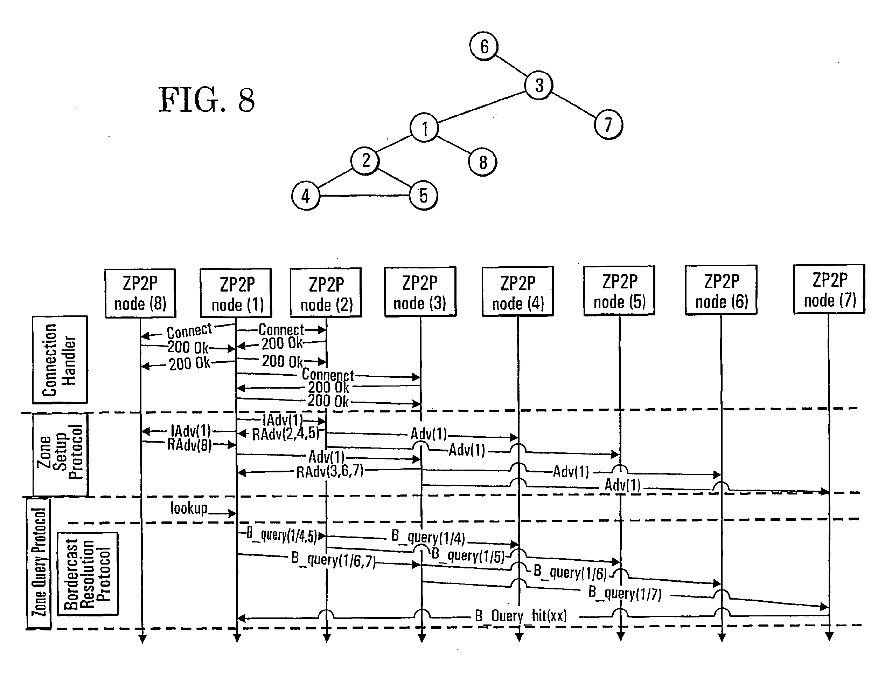

While above the general principles and preferred embodiments of the present invention have been explained with respect to Figs. 1 to 7, in the following, an application example and experimental results will be explained with respect to Figs. 8 to 11.

Fig. 8 shows an example where it is assumed that initially a peer node 1 is directed to peer node 2 and 8 already actively integrated into the zone-based peer-to-peer network. Heretofore, the connection handler initially establishes a connection, e.g., on the TCP layer followed by a handshake 200 Ok between the peer node and the peer node 2 and 8, and also between peer node 1 and peer node 3 for evaluation of an established connection. After this first phase of peer zone establishment, the new peer node 1 becomes a member of the zone-based peer-to-peer network and knows about its direct neighbours, i.e. peer node 2, 8, 3, respectively, however, does not know what content is available within its special peer groups.

As shown in Fig. 8, to make shared information on available contents also accessible at new peer node 1, there is executed a second phase according to the zone set-up protocol and related initial advertisement and response advertisement messages, respectively. Heretofore, Fig. 8 shows the message sequence chart for content advertisement and initially peer node 1 distributes an initial advertisement in its special peer zone to announce its presence and to receive shared information on available content in the special peer zone. On receiving the initial advertisement from peer node 1, direct neighbour peer nodes 2, 3, and 8 respond with their response advertisement and additionally with advertisement of peer zone members which are more distant to the new peer node 1 and which advertisement has been previously received by the direct neighbour peer node to the new peer node 1. In other words, the direct neighbour peer nodes of peer node 1 already know what content is available in the special peer group due to previous advertisements they have received within their related special peer groups. Therefore, additional transfers of advertisements via additional links may be avoided.

While so far no specific type of storage for search data has been mentioned, one appropriate approach would be to maintain search data in tabular form as routing tables as known from, e.g., destination sequence distance vector protocols DSDV or optimised link state routing protocols OLSR or further some routing protocols ZRP, mentioned above.

Here, assuming that a user of peer node 1 searches for content in the zone-based peer-to-peer network, the related request is directed from the zone-based peer-to-peer protocol to the zone query protocol instance to check the routing tables. In this case, should the requested content be available in its special peer group, it may be downloaded directly from the node specified in the local routing tables. However, should the content not be available in the special peer group, the zone query protocol ZQP instance sends a request to the border resolution protocol BRP instance to send out a bordercast request message to the border peer nodes. As mentioned above, the border peer nodes themselves look up their tables for requested content and forward the request to their border peer nodes, if necessary. Here, Fig. 8, the lower part thereof, indicates a case where content is not shared in the special peer group of node 1, nevertheless being receivable through one bordercast resolution process at the peer node 7.

Further to the above, it should be noted that during this bordercast resolution, related hop counters and special peer group counters may be up-dated appropriately, which also applies to the route information already taken. Further, an advertisement of a content resource may consist of a locally unique description like a content name, an MD5 hash value, or a globally unique descriptor of the content resource, i.e. an MD5 hash value of the content file, or further hash values of key words as meter data describing the content resource. For evaluation of search data, such routing messages comprising the advertisement may then be compared with hashed search key words of routing message payload sections. Should searched key words match the description of the content being available in a special peer group of a peer node, this will indicate a content hit, as outlined previously.

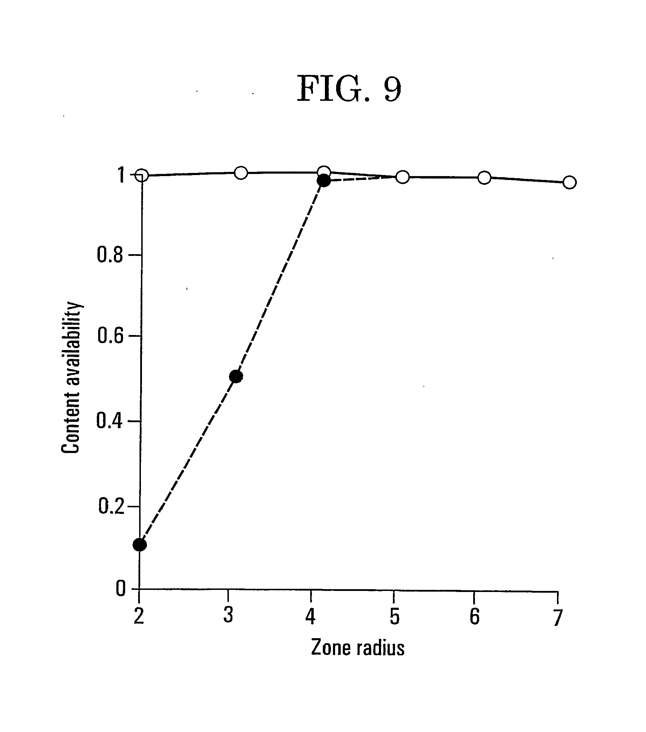

Further, to the above, Figs. 9 to 11 show experimental results achieved with the zone-based peer-to-peer system. Here, the zone-based peer-to-peer protocol has been compared with the Gnutella protocol, using an approach based on random graph theory. In particular, as generally assumption for the random graph, there has been used an exponential distribution of node degrees in the application layer, assuming an average degree of three connections per node, resulting in a variance of 3.46 and a coefficient of the exponential distribution κ=3.48.

In view of the above, Fig. 9 shows the availability of a specific resource content in average, against zone radius for κ=3.48, wherein the dash-line represents availability of resource content within the special peer zone and the solid line represents availability of resource content in the inner and all neighbouring special peer groups. From this Fig. 9 it may be concluded that the higher the zone radius, the higher the content availability will be.

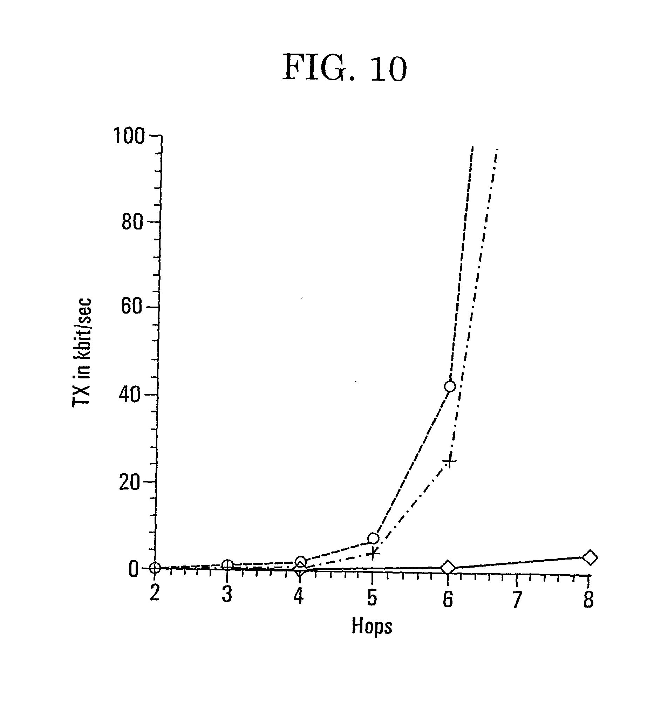

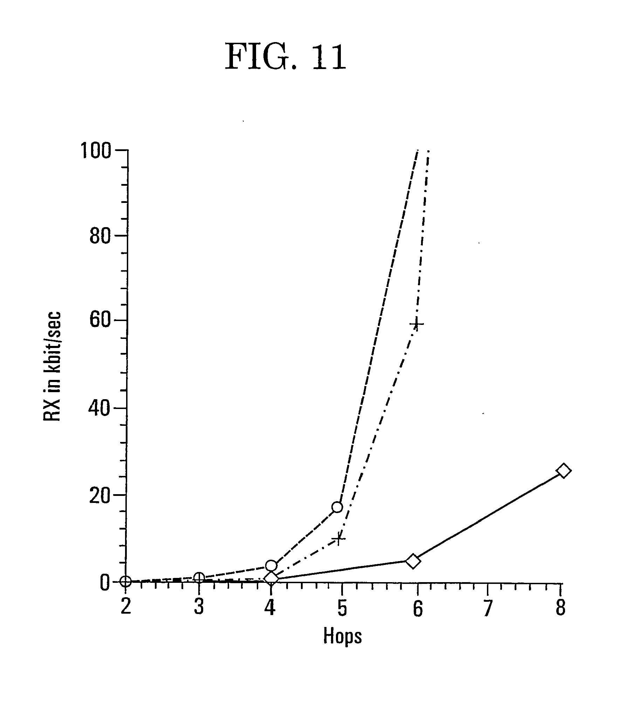

Further, Figs. 10 and 11 show graphic charts by one Gnutella node according to Gnutella 0.4, dash, circle, and Gnutella 0.6, dash-dot, cross, in comparison with one zone-based peer-to-peer protocol ZBP peer node, solid, diamond, for κ=3.48. In particular, Fig. 10 is related to routing traffic initiated by a peer node, while Fig. 11 is related to routing traffic received by a peer node.

Again, also from Figs. 10 and 11 the significant improvement through application of the zone-based peer-to-peer networking approach may be derived easily.

## Claims

1. Method of zone-based peer-to-peer overlay networking, wherein at least one subset of peer nodes lying in a zone partition of the peer-to-peer network (10) and sharing information on content is established as special peer group (14, 18), comprising the steps:
establishing a special peer group by identifying (S32) at least one parameter classifying the special peer group, by sending initial advertisements from a centre peer node to advertise content provided through the centre peer node to at least one neighbouring peer node classified according to said at least one parameter, and by receiving (S36) response advertisements from at least one neighbouring peer node so that the centre peer node is informed about content being available in the special peer group;
proactive routing (S14) for content search with respect to peer nodes in the special peer group using knowledge on peer-to-peer overlay network topology and knowledge of hosted content of peer nodes in the special peer group;
reactive routing (S16) of routing request messages for content search with respect to peer nodes outside the special peer group.

2. Method according to claim 1, ***characterized in that*** the method comprises a step of generating a routing message at a peer node initiating a pro-active routing process, wherein the routing message has a message header carrying a global identification of the peer node and a message payload section carrying content search data as a search string and a minimum required download speed.

3. Method according to claim 2, ***characterized in that*** the content search data relates to a search response and that the message payload section comprises an address and global identification of a content providing peer node and at least one content description as content search result, wherein the method comprises a step of using the content description of the requested content to enable the content requesting peer node to download a requested content from at least one content providing peer node.

4. Method according to one of the claims 1 to 3,
***characterized in that*** it comprises a step of initiating a content query triggered by a content request, a step of establishing a special peer group (14, 18) during a content query such that a content requesting peer node is the centre node of the special peer group (14, 18), and a step of classifying peer nodes in the special peer group (14, 18) being different from the centre peer node as inner peer node or border peer node, respectively.

5. Method according to claim 4, ***characterized in that*** it comprises a step of evaluating local search data at the content requesting peer node for retrieval of requested content, wherein the local search data indicates content available within the special peer group (14, 18).

6. Method according to claim 5, ***characterized in that*** it comprises a step of evaluating local search data at the content requesting peer node for retrieval of a path topology to the content providing peer node in the special peer group (14, 18) from the local search data, when the requested content is retrieved through evaluation of the local search data.

7. Method according to one of the claims 4 to 6,
***characterized in that*** it comprises a step of executing a content query at a border peer node of the special peer group (14, 18), when requested content is not retrievable through evaluation of local search data at the content requesting peer node, and a step of evaluating local search data at the border peer node for retrieval of requested content in a neighbouring special peer group in view of border query search data submitted to the border node.

8. Method according to claim 7, ***characterized in that*** the step of executing a content query at a border peer node is repeated recursively across neighbouring special peer groups and that it comprises a step of stopping the recursive execution of content queries at boundary peer nodes after a pre-determined number of recursions.

9. Method according to claim 1 to 8, ***characterized in* *that*** it comprises a step of sending initial advertisement from a new peer node added to the special peer group (14, 18) to advertise content provided through the new peer node to peer nodes in the special peer group (14, 18) at a time of special peer group extension.

10. Method according to one of the claims 1 to 9,
***characterized in that*** the step of establishing a special peer group (14, 18) is executed according to a predetermined peer group radius, wherein the peer group radius is determined as a number of hop counts from a peer node to neighbouring peer nodes or according to an average content replication rate in the peer-to-peer network.

11. Method according to one of the claims 1 to 10,
***characterized in that*** it comprises a step of operating the peer-to-peer network as an overlay network on top of a transportation layer network and a step of binding a peer-to-peer network topology to a physical network topology.

12. Method according to claim 11, ***characterized in that*** it comprises a step of mapping a peer-to-peer network topology to a physical network layer according to semantic relations of available contents at different peer nodes.

13. Method according to claim 11 or 12, ***characterized in that*** it comprises a step of adding a new peer node to the peer-to-peer network through establishment of a connection with at least one peer node of the peer-topeer network at the physical network layer.

14. Peer node (12, 16) for operation in a special peer group (14, 18) of a zone-based peer-to-peer overlay network, wherein the special peer group (14, 18) comprises the peer node (12, 16) and at least one neighbouring peer node and is established for sharing information on content comprising:
- a special peer group establishing unit (32) adapted to establish a special peer group by identifying (S32) at least one parameter classifying the special peer group, by sending initial advertisements to advertise content provided through a centre peer node to at least one neighbouring peer node classified according to said at least one parameter, and by receiving (S36) response advertisements from at least one neighbouring peer node so that the centre peer node is informed about content being available in the special peer group;
- a memory (26) adapted to store knowledge on peer-to-peer overlay network topology and knowledge on hosted content of peer nodes in the special peer group as search data;
- a content evaluation unit (28) adapted to evaluate content availability in response to a content request through processing of search data;
- a proactive routing unit (38) adapted to content retrieval through proactive routing when requested content is shared in the special peer group (14, 18) using knowledge on peer-to-peer overlay network topology and knowledge of hosted content of peer nodes in the special peer group; and
- a reactive routing unit (40) adapted to content retrieval through reactive routing of routing request messages when requested content is not shared in the special peer group.

15. Peer node (12, 16) according to claim 14,
***characterized in that*** the proactive routing unit (38) comprises a routing message generating unit being adapted to generate the routing message with a message header carrying a global identification of the peer node and a message payload section carrying content search data as a search string and a minimum required download speed.

16. Peer node (12, 16) according to claim 15,
***characterized in that*** the routing message generating unit is adapted to generate the routing message such that the content search data relates to a search response and that the message payload section comprises an address and global identification of a content providing peer node and at least one content description as content search result, wherein the routing message processing unit is adapted to use the content description of the requested content to enable download of requested content from at least one content providing peer node.

17. Peer node (12, 16) according to one of the claims 14 to 16, ***characterized in that*** it comprises a content retrieval unit (30) adapted to initiate a content query triggered by a content request, wherein the content retrieval unit (30) is adapted to establish (14, 18) a special peer group for a content query such that the peer node (12, 16) is the centre node of the special peer group (14, 18) and is adapted to classify peer nodes in the special peer group (14, 18) being different from the peer node as inner peer node or border peer node, respectively.

18. Peer node (12, 16) according to one of the claims 14 to 17, ***characterized in that*** it comprises a content evaluation unit (28) adapted to evaluate local search data peer node for retrieval of requested content, wherein the local search data indicates content available within the special peer group (14, 18).

19. Peer node (12, 16) according to claim 18,
***characterized in that*** the content evaluation unit (28) is adapted to evaluate search data for retrieval of a path topology to a content providing peer node in the special peer group (14, 18) from the search data, when the requested content is retrievable though evaluation of the search data.

20. Peer node according to one of the claims 17 or 19,
***characterized in that*** the content retrieval unit (30) is adapted to initiate a content query at a border peer node of the special peer group (14, 18), when requested content is not retrievable through evaluation of search data, wherein the content evaluation unit (28) is adapted to evaluate search data for retrieval of requested content in a neighbouring special peer group in view of submitted border query search data.

21. Peer node (12, 16) according to one of the claims 14 to 20, ***characterized in that*** the special peer group establishing unit (32) is adapted to send an initial advertisement when the peer node (12, 16) is added to a special peer group (14, 18) to advertise content provided through the peer node at a time of special peer group extension.

22. Peer node (12, 16) according to one of the claims 14 to 21, ***characterized in that*** the special peer group establishing unit (32) is adapted to establish a special peer group (14, 18) according to a pre-determined peer group radius, wherein the peer group radius is determined as a number of hop counts from the peer node (12, 16) to neighbouring peer nodes or according to a content replication rate in the peer-to-peer network.

23. Peer node (12, 16) according to one of the claims 14 to 22, ***characterized in that*** it comprises a connection handler adapted to operate the peer-to-peer network as an overlay network on top of a transportation layer network.

24. Peer node (12, 16) according to claim 23,
***characterized in that*** the connection handler is adapted to map a peer-to-peer network topology to a physical network layer according to semantic relations of available contents at different peer nodes.

25. Peer node (12, 16) according to claim 23 or 24,
***characterized in that*** the connection handler is adapted to add a new peer node to the peer-to-peer network through establishment of a connection with at least one peer node of the peer-to-peer network at the physical network layer.

26. Computer program product comprising software code for carrying out the steps of one of the claims 1 to 13, when the computer program product is run on a processor of a peer-to-peer network node.

## Patentansprüche

1. Verfahren eines Bereichs-basierten Peer-to-Peer-Überlagerungsvernetzens (Overlay-Networking), wobei zumindest eine Untergruppe von Peer-Knoten, die in einem Bereichsteil des Peer-to-Peer-Netzwerkes (10) liegen und eine Information über einen Inhalt teilen, als eine spezielle Peer-Gruppe (14, 18) hergestellt wird, mit den Schritten:
Herstellen einer speziellen Peer-Gruppe durch Identifizieren (S32) zumindest eines Parameters, der die spezielle Peer-Gruppe klassifiziert, durch Senden anfänglicher Anzeigen von einem Zentrums-Peer-Knoten, um Inhalt, der durch den Zentrums-Peer-Knoten bereitgestellt wird, an zumindest einen benachbarten Peer-Knoten anzuzeigen, der gemäß dem zumindest einen Parameter klassifiziert ist und durch Empfangen (S36) von Antwortanzeigen von zumindest einem benachbarten Peer-Knoten derart, dass der Zentrums-Peer-Knoten über Inhalt informiert wird, der in der speziellen Peer-Gruppe verfügbar ist;
proaktivem Routing (Weiterleiten) (S14) für eine Inhaltssuche in Bezug auf Peer-Knoten in der speziellen Peer-Gruppe unter Verwendung von Wissen über die Peer-to-Peer-Überlagerungsnetzwerktopologie und Wissen über einen gehosteten Inhalt von Peer-Knoten in der speziellen Peer-Gruppe;
reaktivem Routing (S16) von Routing-Anforderungsnachrichten für eine Inhaltssuche in Bezug auf Peer-Knoten außerhalb der speziellen Peer-Gruppe.

2. Verfahren nach Anspruch 1, **dadurch gekennzeichnet, dass** das Verfahren einen Schritt eines Erzeugens einer Routing-Nachricht an einem Peer-Knoten umfasst, die einen proaktiven Routing-Prozess initiiert, wobei die Routing-Nachricht einen Nachrichten-Header, der eine Globalidentifikation des Peer-Knotens trägt und einen Nachrichtnutzlastabschnitt aufweist, der Inhaltssuchdaten als eine Suchzeichenkette und eine minimal-erforderliche Download-Geschwindigkeit trägt.

3. Verfahren nach Anspruch 2, **dadurch gekennzeichnet, dass** die Inhaltssuchdaten eine Suchantwort betreffen und dass der Nachrichtnutzlastabschnitt eine Adresse und eine Globalidentifikation eines Inhalt-bereitstellenden Peer-Knotens und zumindest eine Inhaltsbeschreibung als Inhaltssuchergebnis umfasst, wobei das Verfahren einen Schritt eines Verwendens der Inhaltsbeschreibung des angeforderten Inhalts umfasst, um es dem Inhalt-anfordernden Peer-Knoten zu ermöglichen, einen angeforderten Inhalt von zumindest einem Inhalt-bereitstellenden Peer-Knoten herunterzuladen.

4. Verfahren nach einem der Ansprüche 1 bis 3, **dadurch gekennzeichnet, dass** dieses einen Schritt eines Initiieren einer Inhaltsabfrage umfasst, die von einer Inhaltsanforderung ausgelöst wird, einen Schritt eines Herstellens einer speziellen Peer-Gruppe (14, 18) während einer Inhaltsabfrage derart, dass ein Inhaltanfordernder Peer-Knoten der Zentrumsknoten der speziellen Peer-Gruppe (14, 18) ist, und einen Schritt eines Klassifizierens von Peer-Knoten in der speziellen Peer-Gruppe (14, 18), die unterschiedlich zu dem Zentrums-Peer-Knoten sind, jeweils als innerer Peer-Knoten oder Grenz-Peer-Knoten.

5. Verfahren nach Anspruch 4, **dadurch gekennzeichnet, dass** dieses einen Schritt eines Evaluierens lokaler Suchdaten an dem Inhalt-anfordernden Peer-Knoten zum Abruf eines angeforderten Inhalts umfasst, wobei die lokalen Suchdaten einen Inhalt anzeigen, der innerhalb der speziellen Peer-Gruppe (14, 18) verfügbar ist.

6. Verfahren nach Anspruch 5, **dadurch gekennzeichnet, dass** dieses einen Schritt eines Evaluierens lokaler Suchdaten an dem Inhalt-anfordernden Peer-Knoten zum Abruf einer Wegtopologie zu dem Inhalt-bereitstellenden Peer-Knoten in der speziellen Peer-Gruppe (14, 18) von den lokalen Suchdaten umfasst, wenn der angeforderte Inhalt durch eine Evaluation der lokalen Suchdaten abgerufen wird.

7. Verfahren nach einem der Ansprüche 4 bis 6, **dadurch gekennzeichnet, dass** dieses einen Schritt eines Ausführens einer Inhaltsabfrage an einem Grenz-Peer-Knoten der speziellen Peer-Gruppe (14, 18) umfasst, wenn der angeforderte Inhalt nicht durch eine Evaluation von lokalen Suchdaten an dem Inhalt-anfordernden Peer-Knoten abrufbar ist, und einen Schritt eines Evaluierens lokaler Suchdaten an dem Grenz-Peer-Knoten zum Abruf des angeforderten Inhalts in einer benachbarten speziellen Peer-Gruppe in Anbetracht von Grenzabfragesuchdaten, die an den Grenzknoten übermittelt werden.

8. Verfahren nach Anspruch 7, **dadurch gekennzeichnet, dass** der Schritt eines Ausführens einer Inhaltsabfrage an dem Grenz-Peer-Knoten rekursiv über benachbarte spezielle Peer-Gruppen wiederholt wird und dass dieses einen Schritt eines Stoppens der rekursiven Ausführung von Inhaltsabfragen an Grenz-Peer-Knoten nach einer vorbestimmten Anzahl von Rekursionen umfasst.

9. Verfahren nach Anspruch 1 bis 8, **dadurch gekennzeichnet, dass** dieses einen Schritt eines Sendens von anfänglichen Anzeigen von einem Peer-Knoten umfasst, der zu der speziellen Peer-Gruppe (14, 18) hinzugefügt ist, um Inhalt, der durch den neuen Peer-Knoten bereitgestellt wird, an Peer-Knoten in der speziellen Peer-Gruppe (14, 18) zu einer Zeit einer Erweiterung der speziellen Peer-Gruppe anzuzeigen.

10. Verfahren nach einem der Ansprüche 1 bis 9, **dadurch gekennzeichnet, dass** der Schritt eines Herstellens einer speziellen Peer-Gruppe (14, 18) gemäß einem vorbestimmten Peer-Grupperadius ausgeführt wird, wobei der Peer-Gruppenradius als eine Anzahl von Sprungzählwerten von einem Peer-Knoten zu benachbarten Peer-Knoten oder gemäß einer durchschnittlichen Inhaltsreplikationsrate in dem Peer-to-Peer-Netzwerk ausgeführt wird.

11. Verfahren nach einem der Ansprüche 1 bis 10, **dadurch gekennzeichnet, dass** dieses einen Schritt eines Betreibens des Peer-to-Peer-Netzwerkes als ein Überlagerungsnetzwerk auf einem Transportschicht-Netzwerk und einen Schritt eines Bindens einer Peer-to-Peer-Netzwerktopologie an eine physikalische Netzwerktopologie umfasst.

12. Verfahren nach Anspruch 11, **dadurch gekennzeichnet, dass** dieses einen Schritt eines Abbildens einer Peer-to-Peer-Netzwerktopologie auf eine physikalische Netzwerkschicht gemäß semantischer Beziehungen verfügbarer Inhalte an unterschiedlichen Peer-Knoten umfasst.

13. Verfahren nach Anspruch 11 oder 12, **dadurch gekennzeichnet, dass** dieses einen Schritt eines Hinzufügens eines neuen Peer-Knotens zu dem Peer-to-Peer-Netzwerk durch eine Herstellung einer Verbindung mit zumindest einem Peer-Knoten des Peer-to-Peer-Netzwerkes an der physikalischen Netzwerkschicht umfasst.

14. Peer-Knoten (12, 16) zum Betrieb in einer speziellen Peer-Gruppe (14, 18) eines Bereichs-basierten Peer-to-Peer-Überlagerungsnetzwerkes, wobei die spezielle Peer-Gruppe (14, 18) den Peer-Knoten (12, 16) und zumindest einen benachbarten Peer-Knoten umfasst und zum Teilen von Information über Inhalt hergestellt ist, mit:
- einer Herstellungseinheit für eine spezielle Peer-Gruppe (32) angepasst, eine spezielle Peer-Gruppe durch Identifizieren (S32) zumindest eines Parameters herzustellen, der die spezielle Peer-Gruppe klassifiziert, durch Senden anfänglicher Anzeigen, um Inhalt, der durch den Zentrums-Peer-Knoten bereitgestellt wird, an zumindest einen benachbarten Knoten anzuzeigen, der gemäß dem zumindest einen Parameter klassifiziert ist und durch Empfangen (S36) von Antwortanzeigen von zumindest einem benachbarten Peer-Knoten derart, dass der Zentrums-Peer-Knoten über Inhalt informiert wird, der in der speziellen Peer-Gruppe verfügbar ist;
- einem Speicher (26) angepasst, Wissen über eine Peer-to-Peer-Überlagerungsnetzwerktopologie und Wissen über einen gehosteten Inhalt von Peer-Knoten in der speziellen Peer-Gruppe als Suchdaten zu speichern;
- einer Inhaltsevaluationseinheit (28) angepasst, eine Inhaltsverfügbarkeit in Reaktion auf eine Inhaltsanforderung durch Verarbeiten von Suchdaten zu evaluieren;
- einer Einheit für proaktives Routing (38) angepasst, einen Abruf durch proaktives Routing zufriedenzustellen, wenn der angeforderte Inhalt in der speziellen Peer-Gruppe (14, 18) geteilt wird, unter Verwendung von Wissen über eine Peer-to-Peer-Überlagerungsnetzwerktopologie und Wissen über gehosteten Inhalt von Peer-Knoten in der speziellen Peer-Gruppe; und
- einer Einheit für reaktives Routing (40) angepasst, einen Abruf durch reaktives Routing von Routing-Anforderungsnachrichten zufriedenzustellen, wenn ein angeforderter Inhalt nicht in der speziellen Peer-Gruppe geteilt wird.

15. Peer-Knoten (12, 16) nach Anspruch 14, **dadurch gekennzeichnet, dass** die Einheit für proaktives Routing (38) eine Routing-Nachricht-erzeugende Einheit umfasst, die angepasst ist, eine Routing-Nachricht mit einem Nachrichten-Header, der eine Globalidentifikation des Peer-Knotens trägt und einem Nachrichtnutzlastabschnitt zu erzeugen, der Inhaltssuchdaten als eine Suchzeichenkette und eine minimal-erforderliche Download-Geschwindigkeit trägt.

16. Peer-Knoten (12, 16) nach Anspruch 15, **dadurch gekennzeichnet, dass** die Routing-Nachricht-erzeugende Einheit angepasst ist, die Routing-Nachricht derart zu erzeugen, dass die Inhaltssuchdaten eine Suchantwort betreffen und dass der Nachrichtnutzlastabschnitt eine Adresse und eine Globalidentifikation eines Inhalt-bereitstellenden Peer-Knotens und zumindest eine Inhaltsbeschreibung als Inhaltssuchergebnis umfasst, wobei die Routing-Nachricht-erzeugende Einheit angepasst ist, die Inhaltsbeschreibung des angeforderten Inhalts zu verwenden, um einen angeforderten Inhalt von zumindest einem Inhalt-bereitstellenden Peer-Knoten herunterzuladen.

17. Peer-Knoten (12, 16) nach einem der Ansprüche 14 bis 16, **dadurch gekennzeichnet, dass** dieser eine Inhaltabrufeinheit (30) umfasst, die angepasst ist, eine Inhaltsanfrage zu initiieren, die von einer Inhaltsanforderung ausgelöst wird, wobei die Inhaltabrufeinheit (30) angepasst ist, eine spezielle Peer-Gruppe (14, 18) für eine Inhaltsanfrage derart herzustellen, dass der Peer-Knoten (12, 16) der Zentrumsknoten der speziellen Peer-Gruppe (14, 18) ist, und angepasst ist, Peer-Knoten in der speziellen Peer-Gruppe (14, 18), die unterschiedlich zu dem Peer-Knoten sind, jeweils als innerer Peer-Knoten oder Grenz-Peer-Knoten zu klassifizieren.

18. Peer-Knoten (12, 16) nach einem der Ansprüche 14 bis 17, **dadurch gekennzeichnet, dass** dieser eine Inhaltevaluationseinheit (28) umfasst, die angepasst ist, einen lokalen Suchdaten-Peer-Knoten zum Abruf eines angeforderten Inhalts zu evaluieren, wobei die lokalen Suchdaten einen Inhalt anzeigen, der innerhalb der speziellen Peer-Gruppe (14, 18) verfügbar ist.

19. Peer-Knoten (12, 16) nach Anspruch 18, **dadurch gekennzeichnet, dass** die Inhaltevaluationseinheit (28) angepasst ist, Suchdaten zum Abruf einer Wegtopologie zu einem Inhalt-bereitstellenden Peer-Knoten in der speziellen Peer-Gruppe (14, 18) von den Suchdaten zu evaluieren, wenn der angeforderte Inhalt durch eine Evaluation der Suchdaten abgerufen wird.

20. Peer-Knoten (12, 16) nach Anspruch 17 oder 19, **dadurch gekennzeichnet, dass** die Inhaltabrufeinheit (30) angepasst ist, eine Inhaltsabfrage an einem Grenz-Peer-Knoten der speziellen Peer-Gruppe (14, 18) zu initiieren, wenn der angeforderte Inhalt nicht durch eine Evaluation von Suchdaten an dem Inhalt-anfordernden Peer-Knoten abrufbar ist, wobei die Inhaltsevaluationseinheit (28) angepasst ist, Suchdaten zum Abruf eines angeforderten Inhalts in einer benachbarten speziellen Peer-Gruppe in Anbetracht von übermittelten Grenzabfragesuchdaten zu evaluieren.

21. Peer-Knoten (12, 16) nach einem der Ansprüche 14 bis 20, **dadurch gekennzeichnet, dass** die Herstellungseinheit (32) für die spezielle Peer-Gruppe angepasst ist, anfängliche Anzeigen zu senden, wenn der Peer-Knoten (12, 16) zu der speziellen Peer-Gruppe (14, 18) hinzugefügt wird, um Inhalt, der durch den neuen Peer-Knoten bereitgestellt wird, zu einer Zeit einer Erweiterung der speziellen Peer-Gruppe anzuzeigen.

22. Peer-Knoten (12, 16) nach einem der Ansprüche 14 bis 21, **dadurch gekennzeichnet, dass** die Herstellungseinheit (32) für die spezielle Peer-Gruppe angepasst ist, eine spezielle Peer-Gruppe (14, 18) gemäß einem vorbestimmten Peer-Grupperadius herzustellen, wobei der Peer-Gruppenradius als eine Anzahl von Sprungzählwerten von dem Peer-Knoten (12, 16) zu benachbarten Peer-Knoten oder gemäß einer Inhaltsreplikationsrate in dem Peer-to-Peer-Netzwerk ausgeführt wird.

23. Peer-Knoten (12, 16) nach einem der Ansprüche 14 bis 22, **dadurch gekennzeichnet, dass** dieser einen Verbindungshandhaber umfasst, der angepasst ist, das Peer-to-Peer-Netzwerk als ein Überlagerungsnetzwerk auf einem Transportschicht-Netzwerk zu betreiben.

24. Peer-Knoten (12, 16) nach Anspruch 23, **dadurch gekennzeichnet, dass** der Verbindungshandhaber angepasst ist, eine Peer-to-Peer-Netzwerktopologie auf eine physikalische Netzwerkschicht gemäß semantischer Beziehungen verfügbarer Inhalte an unterschiedlichen Peer-Knoten abzubilden.

25. Peer-Knoten (12, 16) nach Anspruch 23 oder 24, **dadurch gekennzeichnet, dass** der Verbindungshandhaber angepasst ist, einen neuen Netzwerkknoten zu dem Peer-to-Peer-Netzwerk durch eine Herstellung einer Verbindung mit zumindest einem Peer-Knoten des Peer-to-Peer-Netzwerkes an der physikalischen Netzwerkschicht hinzuzufügen.

26. Computerprogramm-Produkt mit Softwarecode zum Ausführen der Schritte eines der Ansprüche 1 bis 13, wenn das Computerprogrammprodukt auf einem Prozessor eines Peer-to-Peer-Netzwerkknotens läuft.

## Revendications

1. Procédé d'interconnexion de réseaux dédiés d'égal à égal à base de zones, dans lequel au moins un sous-ensemble de noeuds homologues se trouvant dans une division de zone du réseau d'égal à égal (10) et partageant des informations de contenu est établi en tant que groupe homologue spécial (14, 18), comprenant les étapes consistant à :
établir un groupe homologue spécial en identifiant (S32) au moins un paramètre classant le groupe homologue spécial, en envoyant des annonces initiales à partir d'un noeud homologue central pour annoncer le contenu fourni par le noeud homologue central à au moins un noeud homologue voisin classé selon ledit au moins un paramètre, et en recevant (S36) des annonces de réponse à partir d'au moins un noeud homologue voisin de sorte que le noeud homologue central est informé du contenu disponible dans le groupe homologue spécial ;
effectuer un routage proactif (S14) pour rechercher un contenu en ce qui concerne des noeuds homologues dans le groupe homologue spécial en utilisant une connaissance sur la topologie de réseau dédié d'égal à égal et une connaissance de contenu hébergé de noeuds homologues dans le groupe homologue spécial ;
effectuer un routage réactif (S16) de messages de demande de routage pour rechercher un contenu en ce qui concerne des noeuds homologues à l'extérieur du groupe homologue spécial.

2. Procédé selon la revendication 1, ***caractérisé en ce que*** le procédé comprend une étape consistant à produire un message de routage au niveau d'un noeud homologue amorçant un processus de routage proactif, dans lequel le message de routage comporte un en-tête de message portant une identification globale du noeud homologue et une section utile de message portant des données de recherche de contenu en tant que chaîne de recherche et une vitesse minimale de téléchargement exigée.

3. Procédé selon la revendication 2, ***caractérisé en ce que*** les données de recherche de contenu se rapportent à une réponse de recherche et **en ce que** la section utile de message comprend une adresse et une identification globale d'un noeud homologue fournissant un contenu et au moins une description de contenu en tant que résultat de recherche de contenu, dans lequel le procédé comprend une étape consistant à utiliser la description de contenu du contenu demandé pour permettre au noeud homologue demandant un contenu de télécharger un contenu demandé à partir d'au moins un noeud homologue fournissant un contenu.

4. Procédé selon l'une des revendications 1 à 3, ***caractérisé en ce qu*'**il comprend une étape consistant à amorcer une interrogation de contenu déclenchée par une demande de contenu, une étape consistant à établir un groupe homologue spécial (14, 18) pendant une interrogation de contenu de sorte qu'un noeud homologue demandant un contenu est le noeud central du groupe homologue spécial (14, 18), et une étape consistant à classer des noeuds homologues dans le groupe homologue spécial (14, 18) différents du noeud homologue central respectivement en tant que noeud homologue intérieur ou noeud homologue limitrophe.

5. Procédé selon la revendication 4, ***caractérisé en ce qu*'**il comprend une étape consistant à évaluer des données de recherche locale au niveau du noeud homologue demandant un contenu pour la récupération d'un contenu demandé, dans lequel les données de recherche locale indiquent un contenu disponible à l'intérieur du groupe homologue spécial (14, 18).

6. Procédé selon la revendication 5, ***caractérisé en ce qu*'**il comprend une étape consistant à évaluer des données de recherche locale au niveau du noeud homologue demandant un contenu pour la récupération d'une topologie de chemin vers le noeud homologue fournissant un contenu dans le groupe homologue spécial (14, 18) à partir des données de recherche locale, lorsque le contenu demandé est retrouvé par l'évaluation des données de recherche locale.

7. Procédé selon l'une des revendications 4 à 6, ***caractérisé en ce qu*'**il comprend une étape consistant à exécuter une interrogation de contenu au niveau d'un noeud homologue limitrophe du groupe homologue spécial (14, 18), lorsque le contenu demandé n'est pas récupérable par l'évaluation de données de recherche locale au niveau du noeud homologue demandant un contenu, et une étape consistant à évaluer des données de recherche locale au niveau du noeud homologue limitrophe pour la récupération d'un contenu demandé dans un groupe homologue spécial voisin en vue de données de recherche d'interrogation limitrophe soumises au noeud limitrophe.

8. Procédé selon la revendication 7, ***caractérisé en ce que*** l'étape consistant à exécuter une interrogation de contenu au niveau d'un noeud homologue limitrophe est répétée de manière récursive tout au long de groupes homologues spéciaux voisins et **en ce qu'**il comprend une étape consistant à arrêter l'exécution récursive d'interrogations de contenu au niveau de noeuds homologues limitrophes après un nombre prédéterminé de récurrences.

9. Procédé selon la revendication 1 à 8, ***caractérisé en ce qu*'**il comprend une étape consistant à envoyer une annonce initiale à partir d'un nouveau noeud homologue ajouté au groupe homologue spécial (14, 18) pour annoncer un contenu fourni par le nouveau noeud homologue aux noeuds homologues dans le groupe homologue spécial (14, 18) à un moment d'extension de groupe homologue spécial.

10. Procédé selon l'une des revendications 1 à 9, ***caractérisé en ce que*** l'étape consistant à établir un groupe homologue spécial (14, 18) est exécutée selon un rayon de groupe homologue prédéterminé, dans lequel le rayon de groupe homologue est déterminé en tant que nombre de bonds depuis un noeud homologue vers des noeuds homologues voisins ou selon une vitesse moyenne de reproduction de contenu dans le réseau d'égal à égal.

11. Procédé selon l'une des revendications 1 à 10, ***caractérisé en ce qu*'**il comprend une étape consistant à mettre en oeuvre le réseau d'égal à égal en tant que réseau dédié sur le dessus d'un réseau de couche de transport et une étape consistant à lier une topologie de réseau d'égal à égal à une topologie de réseau physique.

12. Procédé selon la revendication 11, ***caractérisé en ce qu*'**il comprend une étape consistant à mettre en correspondance une topologie de réseau d'égal à égal avec une couche de réseau physique selon des relations sémantiques de contenus disponibles au niveau de noeuds homologues différents.

13. Procédé selon la revendication 11 ou 12, ***caractérisé en ce qu*'**il comprend une étape consistant à ajouter un nouveau noeud homologue au réseau d'égal à égal par l'établissement d'une connexion avec au moins un noeud homologue du réseau d' égal à égal au niveau de la couche de réseau physique.

14. Noeud homologue (12, 16) pour une mise en oeuvre dans un groupe homologue spécial (14, 18) d'un réseau dédié d'égal à égal à base de zones, dans lequel le groupe homologue spécial (14, 18) comprend le noeud homologue (12, 16) et au moins un noeud homologue voisin et est établi pour partager des informations sur un contenu, comprenant :
- une unité d'établissement de groupe homologue spécial (32) conçue pour établir un groupe homologue spécial en identifiant (S32) au moins un paramètre classant le groupe homologue spécial, en envoyant des annonces initiales pour annoncer un contenu fourni par un noeud homologue central à au moins un noeud homologue voisin classé selon ledit au moins un paramètre, et en recevant (S36) des annonces de réponse en provenance d'au moins un noeud homologue voisin de sorte que le noeud homologue central est informé du contenu disponible dans le groupe homologue spécial ;
- une mémoire (26) conçue pour stocker une connaissance sur la topologie de réseau dédié d'égal à égal et une connaissance sur le contenu hébergé de noeuds homologues dans le groupe homologue spécial en tant que données de recherche ;
- une unité d'évaluation de contenu (28) conçue pour évaluer la disponibilité de contenu en réponse à une demande de contenu par un traitement de données de recherche ;
- une unité de routage proactif (38) conçue pour retrouver un contenu par un routage proactif quand un contenu demandé est partagé dans le groupe homologue spécial (14, 18) en utilisant une connaissance sur la topologie de réseau dédié d'égal à égal et une connaissance de contenu hébergé de noeuds homologues dans le groupe homologue spécial ; et
- une unité de routage réactif (40) conçue pour retrouver un contenu par un routage réactif de messages de demande de routage quand le contenu demandé n'est pas partagé dans le groupe homologue spécial.

15. Noeud homologue (12, 16) selon la revendication 14, ***caractérisé en ce que*** l'unité de routage proactif (38) comprend une unité de production de message de routage conçue pour produire le message de routage avec un en-tête de message portant une identification globale du noeud homologue et une section utile de message portant des données de recherche de contenu en tant que chaîne de recherche et une vitesse minimale de téléchargement exigée.

16. Noeud homologue (12, 16) selon la revendication 15, ***caractérisé en ce que*** l'unité de production de message de routage est conçue pour produire le message de routage de sorte que les données de recherche de contenu se rapportent à une réponse de recherche et **en ce que** la section utile de message comprend une adresse et une identification globale d'un noeud homologue fournissant un contenu et au moins une description de contenu en tant que résultat de recherche de contenu, dans lequel l'unité de traitement de message de routage est conçue pour utiliser la description de contenu du contenu demandé pour permettre le téléchargement d'un contenu demandé à partir d'au moins un noeud homologue fournissant un contenu.

17. Noeud homologue (12, 16) selon l'une des revendications 14 à 16, ***caractérisé en ce qu*'**il comprend une unité de récupération de contenu (30) conçue pour amorcer une interrogation de contenu déclenchée par une demande de contenu, dans lequel l'unité de récupération de contenu (30) est conçue pour établir (14, 18) un groupe homologue spécial pour une interrogation de contenu de sorte que le noeud homologue (12, 16) est le noeud central du groupe homologue spécial (14, 18) et est conçue pour classer des noeuds homologues dans le groupe homologue spécial (14, 18) différents du noeud homologue respectivement en tant que noeud homologue intérieur ou noeud homologue limitrophe.

18. Noeud homologue (12, 16) selon l'une des revendications 14 à 17, ***caractérisé en ce qu*'**il comprend une unité d'évaluation de contenu (28) conçue pour évaluer un noeud homologue de données de recherche locale pour la récupération d'un contenu demandé, dans lequel les données de recherche locale indiquent un contenu disponible à l'intérieur du groupe homologue spécial (14, 18).

19. Noeud homologue (12, 16) selon la revendication 18, ***caractérisé en ce que*** l'unité d'évaluation de contenu (28) est conçue pour évaluer des données de recherche pour la récupération d'une topologie de chemin vers un noeud homologue fournissant un contenu dans le groupe homologue spécial (14, 18) à partir des données de recherche, lorsque le contenu demandé est récupérable par l'évaluation des données de recherche.

20. Noeud homologue selon l'une des revendications 17 ou 19, ***caractérisé en ce que*** l'unité de récupération de contenu (30) est conçue pour amorcer une interrogation de contenu au niveau d'un noeud homologue limitrophe du groupe homologue spécial (14, 18), lorsque le contenu demandé n'est pas récupérable par l'évaluation de données de recherche, dans lequel l'unité d'évaluation de contenu (28) est conçue pour évaluer des données de recherche pour la récupération d'un contenu demandé dans un groupe homologue spécial voisin en vue de données de recherche d'interrogation limitrophe soumises.

21. Noeud homologue (12, 16) selon l'une des revendications 14 à 20, ***caractérisé en ce que*** l'unité d'établissement de groupe homologue spécial (32) est conçue pour envoyer une annonce initiale lorsque le noeud homologue (12, 16) est ajouté à un groupe homologue spécial (14, 18) pour annoncer un contenu fourni par le noeud homologue à un moment d'extension de groupe homologue spécial.

22. Noeud homologue (12, 16) selon l'une des revendications 14 à 21, ***caractérisé en ce que*** l'unité d'établissement de groupe homologue spécial (32) est conçue pour établir un groupe homologue spécial (14, 18) selon un rayon de groupe homologue prédéterminé, dans lequel le rayon de groupe homologue est déterminé en tant que nombre de bonds depuis le noeud homologue (12, 16) vers des noeuds homologues voisins ou selon une vitesse de reproduction de contenu dans le réseau d'égal à égal.

23. Noeud homologue (12, 16) selon l'une des revendications 14 à 22, ***caractérisé en ce qu*'**il comprend un gestionnaire de connexion conçu pour mettre en oeuvre le réseau d'égal à égal en tant que réseau dédié sur le dessus d'un réseau de couche de transport.

24. Noeud homologue (12, 16) selon la revendication 23, ***caractérisé en ce que*** le gestionnaire de connexion est conçu pour mettre en correspondance une topologie de réseau d'égal à égal avec une couche de réseau physique selon des relations sémantiques de contenus disponibles au niveau de noeuds homologues différents.

25. Noeud homologue (12, 16) selon la revendication 23 ou 24, ***caractérisé en ce que*** le gestionnaire de connexion est conçu pour ajouter un nouveau noeud homologue au réseau d'égal à égal par l'établissement d'une connexion avec au moins un noeud homologue du réseau d'égal à égal au niveau de la couche de réseau physique.

26. Produit formant programme informatique comprenant un code logiciel pour effectuer les étapes d'une des revendications 1 à 13, lorsque le produit formant programme informatique est exécuté sur un processeur d'un noeud de réseau d'égal à égal.
